# FASCICULE DE BREVET EUROPEEN

(11) **EP 2 746 092 B1**
(45) Date de publication et mention de la délivrance du brevet: **13.05.2020**
(21) Numéro de dépôt: 13196154.2
(22) Date de dépôt: 09.12.2013
(51) Int. Cl.: B60L 50/61, H02J 7/14, B60L 3/00, B60L 15/00, B60L 58/12

(54) **Système embarqué d'accroissement de l'autonomie d'un véhicule électrique**
Bordsystem zur Erhöhung der Autonomie eines Elektrofahrzeugs
On-board system for increasing the range of an electric vehicle

(30) Priorité: 21.12.2012 FR 1262540
(43) Date de publication de la demande: 25.06.2014
(73) Titulaire: VALEO EQUIPEMENTS ELECTRIQUES MOTEUR, 94046 Créteil (FR)
(72) Inventeur: Legranger, Jérome, 94000 Creteil (FR); Armiroli, Paul, 94440 Marolles en Brie (FR)
(74) Mandataire: Duprez, Richard

(56) Documents cités:
- FR-A1- 2 842 470
- US-A- 6 137 250
- US-A1- 2011 297 466
- US-A1- 2012 280 502
- US-B1- 7 290 627

## Description

### DOMAINE TECHNIQUE DE L'INVENTION.

La présente invention concerne un système embarqué d'accroissement de l'autonomie d'un véhicule électrique.

### ARRIERE PLAN TECHNOLOGIQUE DE L'INVENTION.

De nos jours l'utilisation des véhicules totalement électriques est encore limitée principalement à cause d'une autonomie souvent réduite à moins de 200 km, malgré le développement de nouveaux stockeurs d'énergie et les grands progrès réalisés dans gestion de l'énergie disponible à bord du véhicule.

Dans le but d'accroître la distance qu'il est possible de parcourir jusqu'à plus de 500 km sans devoir recharger la batterie de traction à des bornes de rechargement spécifiques, opération nécessitant souvent plusieurs heures, certains constructeurs de véhicules électriques ont commercialisé des modèles comportant un système embarqué d'accroissement de l'autonomie, dit "REX", ou "range extender" en terminologie anglaise.

Le concept est basé sur la mise en œuvre d'une machine électrique tournante réversible polyphasée accouplée à un moteur thermique auxiliaire. En mode alternateur, cette machine est entraînée par le moteur thermique et elle charge la batterie de traction du véhicule. En mode moteur, elle assure le démarrage du moteur thermique à partir de la batterie de traction.

Il va de soi qu'un système REX de ce type est un élément de sécurité important en situation d'urgence quand la batterie de traction arrive en fin de décharge, et qu'il n'existe pas de borne de rechargement à proximité.

Toutefois, le fonctionnement en alternateur ou en démarreur de la machine électrique oblige à connecter celle-ci à la batterie de traction au moyen d'un convertisseur alternatif/ continu, appelé couramment "convertisseur AC/ DC", réversible.

Il est connu qu'un convertisseur AC/ DC réversible est un dispositif électronique de puissance complexe, qui présente par conséquent l'inconvénient d'être onéreux.

D'autant plus onéreux, que la machine électrique doit être conçue pour produire un couple important nécessaire au démarrage du moteur thermique et que

D'autant plus onéreux, que la machine électrique doit être conçue pour produire un couple important nécessaire au démarrage du moteur thermique et que le convertisseur doit donc être capable de fournir le fort courant correspondant

De plus, dans ce type de REX, le moteur thermique fonctionne le plus souvent à une vitesse constante suffisante pour charger la batterie de traction et choisie pour minimiser les émissions de gaz polluants et le bruit.

Il en résulte que le rendement global d'un système REX de ce type est faible, à cause des pertes dans les cycles charge/ décharge.

Il existe donc un besoin, sur un marché très concurrentiel, pour un système REX moins onéreux que ceux connus de l'état de la technique et présentant un meilleur rendement.

Le document US 6137250 décrit une architecture de véhicule comprenant un système de type REX dont le but est d'améliorer le confort des passagers du véhicule. Le document US 2012/0280502 décrit une autre architecture de véhicule comprenant un système de type REX pour des petits véhicules.

### DESCRIPTION GENERALE DE L'INVENTION.

La présente invention vise à satisfaire ce besoin en proposant un système d'accroissement de l'autonomie d'un véhicule électrique suivant la revendication 1 du type de ceux comprenant une machine électrique tournante polyphasée accouplée mécaniquement à un moteur thermique et connectée électriquement à un convertisseur alternatif/ continu apte à être relié à une batterie de traction destinée à alimenter au moins un moteur électrique de traction par un réseau électrique de puissance de ce véhicule.

Conformément à l'invention, le système d'accroissement de l'autonomie d'un véhicule électrique comporte une machine électrique tournante polyphasée qui fonctionne uniquement en mode générateur et comporte, en outre, des moyens de mesure d'une vitesse de rotation du moteur thermique et des moyens de mesure d'une tension appliquée à la batterie de traction par le convertisseur alternatif/ continu.

On tire bénéfice du fait que le système embarqué d'accroissement de l'autonomie d'un véhicule électrique selon l'invention comprend en outre un démarreur électrique apte à démarrer le moteur thermique.

Ce démarreur électrique entraîne avantageusement le moteur thermique avec un rapport de démultiplication prédéterminé, de préférence égal à 1/20.

Le système embarqué d'accroissement de l'autonomie d'un véhicule électrique selon l'invention est aussi remarquable en ce que la machine électrique tournante polyphasée est de préférence un alternateur polyphasé et le convertisseur alternatif/ continu est préférentiellement constitué d'un pont de diodes.

De ce fait, on tire bénéfice de ce que le système embarqué d'accroissement de l'autonomie d'un véhicule électrique selon l'invention comprenne en outre des moyens de déconnexion de la batterie de traction du convertisseur alternatif/ continu quand cette vitesse de rotation est inférieure à une vitesse nominale prédéterminée ou cette tension est supérieure à une tension nominale prédéterminée.

De ce fait également, le système embarqué d'accroissement de l'autonomie d'un véhicule électrique comprend alors en outre, de préférence:
- des moyens de mesure d'un courant de charge de la batterie de traction;
- une unité de contrôle électronique commandant la vitesse de rotation en fonction du courant de charge et d'une intensité de consigne.

Cette intensité de consigne est avantageusement déterminée en fonction de cette tension et d'une tension de consigne.

La machine électrique tournante polyphasée du système embarqué d'accroissement de l'autonomie d'un véhicule électrique selon l'invention comprend avantageusement un stator entouré au moins en partie par un dispositif de refroidissement à liquide.

Dans le système embarqué d'accroissement de l'autonomie d'un véhicule électrique selon l'invention, la machine électrique tournante polyphasée est de préférence d'un type à aimants permanents.

Ces quelques spécifications essentielles auront rendu évidents pour l'homme de métier les avantages apportés par le système embarqué d'accroissement de l'autonomie d'un véhicule électrique selon l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma de principe général d'un système embarqué d'accroissement de l'autonomie d'un véhicule électrique connu de l'état de la technique.
La **Figure 2** est un schéma de principe général d'un système embarqué d'accroissement de l'autonomie d'un véhicule électrique selon l'invention.
Les **Figures 3a et 3b** montrent respectivement des boucles de régulation d'un courant de charge d'une batterie de traction à partir d'une intensité de consigne et à partir d'une tension de consigne.
La **Figure 4** représente les caractéristiques puissance/ vitesse de rotation d'un redressement par pont de diodes et par redressement synchrone de la sortie d'un alternateur.
La **Figure 5** montre en détail les éléments électriques d'un mode de réalisation préféré de l'invention.

### DESCRIPTION DES MODES DE REALISATION PREFERES DE L'INVENTION.

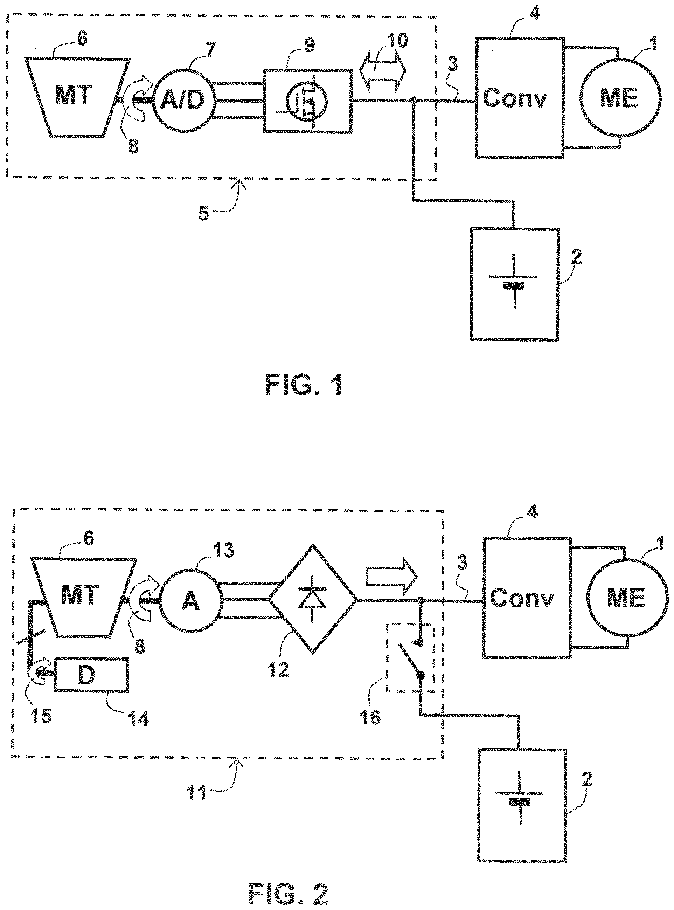

Un rappel, en liaison avec la **Figure 1****,** des caractéristiques d'un système embarqué d'accroissement de l'autonomie d'un véhicule électrique connu de l'état de la technique permettra de bien comprendre l'apport de l'invention.

La **Figure 1** montre schématiquement un moteur électrique de traction 1 alimenté par une batterie de traction 2 via un réseau électrique de puissance 3 du véhicule. Un convertisseur de puissance 4 adapte la tension de la batterie 2 et du réseau électrique de puissance 3 aux caractéristiques du moteur électrique de traction 1. Il s'agira le plus souvent d'un dispositif de conversion continu/ alternatif réversible permettant d'alimenter le moteur électrique de traction 1 d'un type polyphasé à aimants permanents à partir de la batterie de traction 2 et de récupérer une partie de l'énergie mécanique produite pendant les phases de freinage du véhicule en chargeant la batterie de traction 2.

Dans le but d'augmenter la distance que le véhicule peut parcourir entre deux recharges à des bornes, un système embarqué d'accroissement de l'autonomie 5 permet de fournir de l'énergie électrique au réseau électrique de puissance 3, soit pour recharger la batterie de traction 2, soit pour alimenter le moteur électrique de traction 1.

Ce système embarqué d'accroissement de l'autonomie 5 comprend:
- un moteur thermique de faible cylindrée;
- une machine électrique tournante 7 polyphasé accouplée mécaniquement 8 au moteur thermique 6;
- un convertisseur alternatif/ continu 9 connecté électriquement à la machine électrique tournante 7 et alimentant le réseau électrique de puissance 3.

Dans ce système embarqué d'accroissement de l'autonomie 5 connu de l'état de la technique, la machine électrique tournante 7 est un alterno-démarreur permettant de fournir de l'énergie électrique quand elle est entraînée par le moteur thermique 6, mais aussi d'entraîner le moteur thermique 6 au démarrage de celui-ci.

Il s'ensuit que les échanges entre le réseau électrique de puissance 3 et la machine électrique tournante 7 sont bidirectionnels 10.

Le convertisseur alternatif/ continu 9 doit par conséquent être réversible, et il comprend généralement des transistors de type MOSFET fonctionnant en modulation de largeur d'impulsions (ou PWM, acronyme de "Pulse Width Modulation" en terminologie anglaise), c'est-à-dire qu'il constitue un équipement à semi-conducteurs complexe et onéreux.

Dans le système embarqué d'accroissement de l'autonomie 11 selon l'invention montré sur la **Figure 2****,** cet équipement complexe et onéreux est remplacé par un pont de diodes 12 standard, compatible avec des tensions élevées, de préférence entre 100 et 500 V.

Le moteur thermique 6 entraîne une machine électrique tournante 13 qui fonctionne uniquement en mode générateur, et qui est de préférence un alternateur 13 polyphasé standard dans le but de réduire les coûts.

Le démarrage du moteur thermique 6 est assuré par un démarreur électrique 14 de petite puissance couplé mécaniquement 15 au moteur thermique 6 avec un rapport de démultiplication élevé, de préférence de 1/20.

Ce rapport de démultiplication est prédéterminé pour que le couple de démarrage soit de l'ordre de 80 Nm et que le couple d'entraînement à 500 tr/ mn soit de l'ordre de 40 Nm.

L'alternateur 13 est une machine tournant à vitesse élevée, typiquement de l'ordre de 10.000 ou 15.000 tr/ mn, dans le but de réduire sa taille, en étant couplée au moteur thermique par une liaison mécanique appropriée.

Le système embarqué d'accroissement de l'autonomie 11 selon l'invention comprend un dispositif électronique de déconnection 16 de la batterie de traction 2 dans certaines conditions de fonctionnement.

Une première raison de ce dispositif électronique de déconnection 16 est de permettre à l'alternateur 13 de fournir de l'énergie électrique au réseau de puissance 3 sans qu'une tension appliquée à la batterie de traction 2 différente de sa tension nominale soit une contrainte.

Ces conditions se produisent pour une faible vitesse de rotation du moteur thermique 6, par exemple inférieure à une vitesse nominale prédéterminée, et que, par conséquent, la tension pouvant être appliquée à la batterie de traction 2 est inférieure à sa tension nominale.

Elles se produisent aussi si la tension appliquée à la batterie de traction 2 devient supérieure à cette tension nominale prédéterminée quand le moteur thermique 6 fonctionne à pleine puissance.

Une seconde raison est de permettre à l'alternateur 13 d'alimenter directement le moteur électrique de traction 1 pour augmenter le rendement global en évitant les cycles de charge/ décharge de la batterie de traction 2, les rendements de conversion entre énergie électrique et énergie électrochimique étant généralement faibles.

Afin d'implémenter cette gestion du dispositif électronique de déconnection 16, le système embarqué d'accroissement de l'autonomie 11 selon l'invention comprend en outre:
- des moyens de mesure d'une vitesse de rotation Ωₘ du moteur thermique 6;
- des moyens de mesure d'une tension appliquée Uₘ à la batterie de traction 2 par le pont de diodes 12.

Une unité de contrôle électronique 17 et des moyens de mesure d'un courant de charge Iₘ permettent de contrôler la charge de la batterie de traction 2 quand celle-ci est connectée au réseau de puissance 3 et est alimentée par l'alternateur 13.

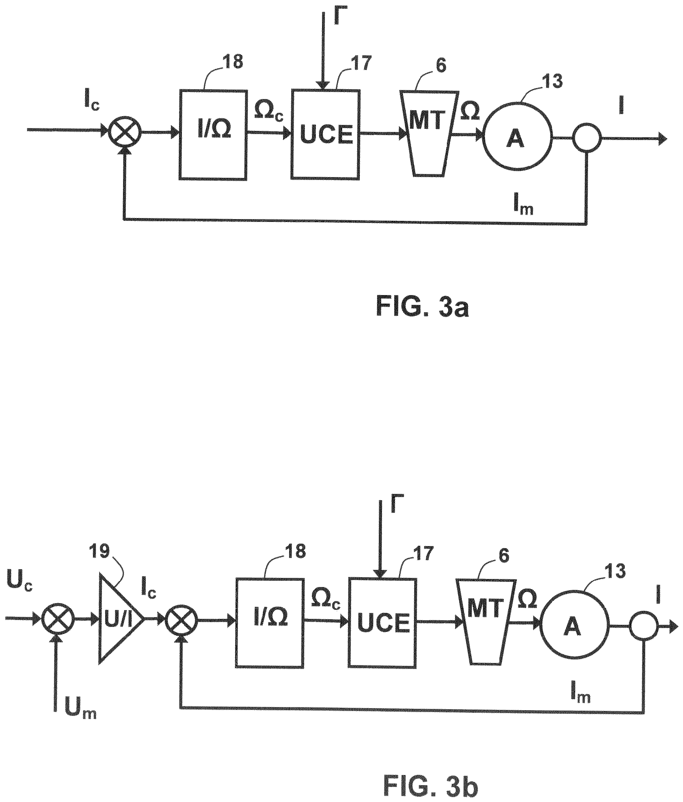

La **Figure 3a** montre un exemple d'une boucle de régulation permettant un maintien du courant de charge Iₘ à une intensité de consigne I_{c} par l'unité de contrôle électronique 17, qui contrôle la vitesse de rotation Ω du moteur thermique 6 entraînant l'alternateur 13.

L'unité de contrôle électronique 17 commande le moteur thermique 6 à partir d'une première conversion 18 d'une intensité d'erreur en vitesse de consigne Ω_{c} en tenant compte d'une mesure de couple Γ.

La **Figure 3b** montre cette même boucle de régulation associée à une boucle de régulation supplémentaire permettant de réguler la tension appliquée Uₘ sur la batterie de traction 2 à une tension de consigne U_{c}. au moyen d'une seconde conversion 19 d'une tension d'erreur en intensité de consigne I_{c}.

Ces première et seconde conversions 18, 19 sont réalisées avantageusement au moyen de tables ou abaques stockées dans la mémoire de l'unité de contrôle électronique 17.

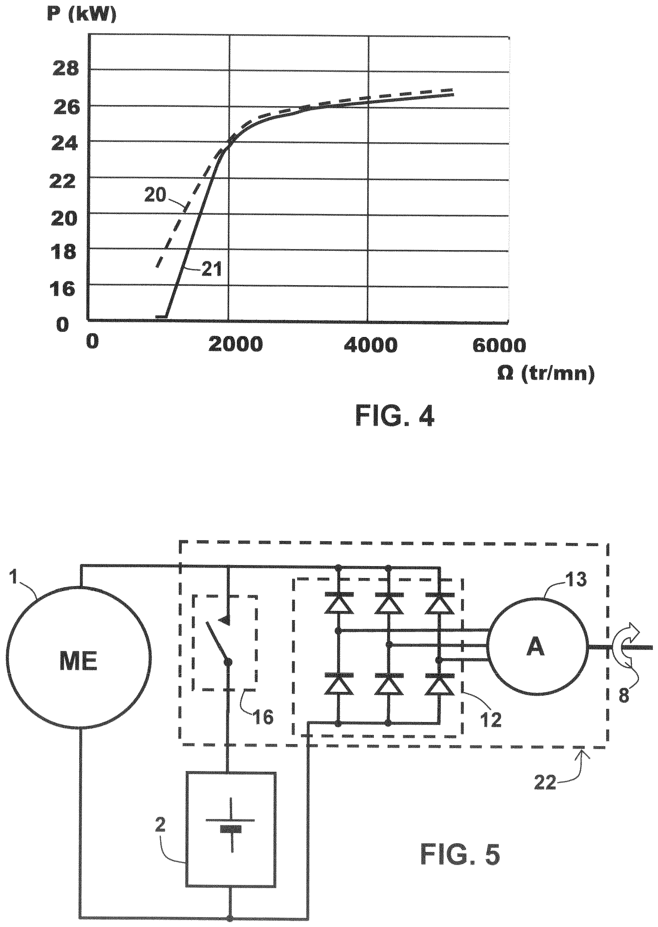

L'asservissement de la vitesse de rotation du moteur thermique 6 par l'unité de contrôle électronique 17, permet de choisir des points de fonctionnement du système embarqué d'accroissement de l'autonomie 11 selon l'invention pour lesquels la puissance électrique de sortie P est identique à celle que fournirait un système comprenant un onéreux convertisseur alternatif/ continu 9 fonctionnant en mode PWM, tels que ceux connus de l'état de la technique, comme le montre bien la **Figure 4****.**

Ce graphique montre que la puissance électrique obtenue par le redressement synchrone de la sortie de l'alternateur 13 (courbe en trait pointillé 20) est supérieure à celle obtenue par l'utilisation d'un pont de diodes 12 (courbe en trait plein 21) pour une vitesse de rotation inférieure à 2000 tr/ mn.

En revanche, pour une vitesse de rotation supérieure à 2000 tr/ mn, les deux courbes 20, 21 se confondent.

Le système embarqué d'accroissement de l'autonomie 11 utilisant un pont de diodes 12 standard, selon l'invention, fonctionnant à des vitesses de rotation supérieures à 2000 tr/ mn offre donc les mêmes performances qu'un système 5 plus complexe et onéreux.

La **Figure 5** montre ce pont de diodes 12 dans un mode particulier de réalisation de l'invention mettant en œuvre un alternateur triphasé 13. Le pont de diodes est donc constitué de six diodes pour un redressement en double alternance.

Dans un alternateur du type dont il s'agit, le pont de diodes 12 et l'alternateur 13 sont associés dans un même carter.

Dans le mode préféré de réalisation de l'invention, le dispositif électronique de déconnection 16 est ajouté au pont de diodes 12 de manière à former avec l'alternateur 13 un ensemble monobloc 22, qui est accouplé au moteur thermique 6 pour constituer un REX 11.

Cet alternateur 13 est refroidi par liquide, compte-tenu de sa puissance maximum importante de l'ordre de 28 kW.

Son rotor est à aimants permanents, et plus de 80% de la surface de son stator est en contact avec le liquide de refroidissement.

Une thermistance fournit avantageusement une indication de température pour l'unité de contrôle électronique 17.

Comme il va de soi l'invention ne se limite pas aux seuls modes d'exécution préférentiels décrits ci-dessus.

Une description analogue pourrait porter sur un type de générateurs électriques 13 différents de ceux spécifiés.

Le générateur 13 est alternativement à une machine à aimant permanents, une machine à excitation, voire une machine hybride.

L'invention embrasse donc toutes les variantes possibles de réalisation dans la mesure où ces variantes restent dans le cadre défini par les revendications ci-après.

## Revendications

1. Système embarqué d'accroissement de l'autonomie (5, 11) d'un véhicule électrique du type de ceux comprenant une machine électrique tournante polyphasée (7, 13) accouplée mécaniquement (8) à un moteur thermique (6) et connectée électriquement à un convertisseur alternatif/ continu (9, 12) apte à être relié à une batterie de traction (2) destinée à alimenter au moins un moteur électrique de traction (1) par un réseau électrique de puissance (3) dudit véhicule, ladite machine électrique tournante polyphasée (13) fonctionnant uniquement en mode générateur, et le système embarqué comprenant des moyens de mesure d'une vitesse de rotation (Ωₘ) dudit moteur thermique (6) ; des moyens de mesure d'une tension appliquée (Uₘ) à ladite batterie de traction (2) par ledit convertisseur alternatif/ continu (12) et **caractérisé par** des moyens de déconnexion (16) de ladite batterie de traction (2) dudit convertisseur alternatif/ continu (12) quand ladite vitesse de rotation (Ωₘ) est inférieure à une vitesse nominale prédéterminée ou ladite tension (Uₘ) est supérieure à une tension nominale prédéterminée pour que la machine (13) alimente directement le moteur électrique de traction (1).

2. Système embarqué d'accroissement de l'autonomie (11) d'un véhicule électrique selon la revendication 1, **caractérisé en ce qu'**il comprend en outre un démarreur électrique (14) apte à démarrer ledit moteur thermique (6).

3. Système embarqué d'accroissement de l'autonomie (11) d'un véhicule électrique selon la revendication 1 ou 2, **caractérisé en ce que** ladite machine électrique tournante polyphasée (13) est un alternateur polyphasé et ledit convertisseur alternatif/ continu (12) est constitué d'un pont de diodes.

4. Système embarqué d'accroissement de l'autonomie (11) d'un véhicule électrique selon l'une quelconque des revendications 1 à 3, **caractérisé en ce qu'**il comprend en outre:
- des moyens de mesure d'un courant de charge (Iₘ) de ladite batterie de traction (2);
- une unité de contrôle électronique (17) commandant ladite vitesse de rotation (Ωₘ) en fonction dudit courant de charge (Iₘ) et d'une intensité de consigne (I_{c}).

5. Système embarqué d'accroissement de l'autonomie (11) d'un véhicule électrique selon la revendication 4, **caractérisé en ce que** ladite intensité de consigne (I_{c}) est déterminée en fonction de ladite tension (Uₘ) et d'une tension de consigne (I_{c}).

6. Système embarqué d'accroissement de l'autonomie (11) d'un véhicule électrique selon l'une quelconque des revendications 1 à 5 précédentes, **caractérisé en ce que** ladite machine électrique tournante polyphasée (13) comprend un stator entouré au moins en partie par un dispositif de refroidissement à liquide.

7. Système embarqué d'accroissement de l'autonomie (11) d'un véhicule électrique selon l'une quelconque des revendications 1 à 6 précédentes, **caractérisé en ce que** ladite machine électrique tournante polyphasée (13) est d'un type à aimants permanents.

## Patentansprüche

1. Bordsystem zur Erhöhung der Autonomie (5, 11) eines Elektrofahrzeugs vom Typ derjenigen, welche eine mehrphasige rotierende elektrische Maschine (7, 13) umfassen, die mit einem Verbrennungsmotor (6) mechanisch gekoppelt (8) ist und mit einem Wechselstrom-Gleichstrom-Wandler (9, 12) elektrisch verbunden ist, der mit einer Traktionsbatterie (2) verbindbar ist, die dazu bestimmt ist, wenigstens einen elektrischen Fahrmotor (1) über ein Stromnetz (3) des Fahrzeugs mit Strom zu versorgen, wobei die mehrphasige rotierende elektrische Maschine (13) ausschließlich im Generatorbetrieb arbeitet, und wobei das Bordsystem Mittel zur Messung einer Drehzahl (Ωₘ) des Verbrennungsmotors (6) und Mittel zur Messung einer von dem Wechselstrom-Gleichstrom-Wandler (12) an die Traktionsbatterie (2) angelegten Spannung (Um) umfasst und **gekennzeichnet ist durch** Mittel zur Trennung (16) der Traktionsbatterie (2) von dem Wechselstrom-Gleichstrom-Wandler (12), wenn die Drehzahl (Ωₘ) niedriger als eine vorbestimmte Nenndrehzahl ist oder die Spannung (Um) höher als eine vorbestimmte Nennspannung ist, damit die Maschine (13) den elektrischen Fahrmotor (1) direkt mit Strom versorgt.

2. Bordsystem zur Erhöhung der Autonomie (11) eines Elektrofahrzeugs nach Anspruch 1, **dadurch gekennzeichnet, dass** es außerdem einen elektrischen Anlasser (14) umfasst, der geeignet ist, den Verbrennungsmotor (6) zu starten.

3. Bordsystem zur Erhöhung der Autonomie (11) eines Elektrofahrzeugs nach Anspruch 1 oder 2, **dadurch gekennzeichnet, dass** die mehrphasige rotierende elektrische Maschine (13) ein Mehrphasengenerator ist und der Wechselstrom-Gleichstrom-Wandler (12) aus einer Diodenbrücke besteht.

4. Bordsystem zur Erhöhung der Autonomie (11) eines Elektrofahrzeugs nach einem der Ansprüche 1 bis 3, **dadurch gekennzeichnet, dass** es außerdem umfasst:
- Mittel zur Messung eines Ladestroms (Iₘ) der Traktionsbatterie (2);
- eine elektronische Steuereinheit (17), welche die Drehzahl (Ωₘ) in Abhängigkeit vom Ladestrom (Iₘ) und von einer Sollstromstärke (I_{c}) steuert.

5. Bordsystem zur Erhöhung der Autonomie (11) eines Elektrofahrzeugs nach Anspruch 4, **dadurch gekennzeichnet, dass** die Sollstromstärke (I_{c}) in Abhängigkeit von der Spannung (Um) und einer Sollspannung (I_{c}) bestimmt wird.

6. Bordsystem zur Erhöhung der Autonomie (11) eines Elektrofahrzeugs nach einem der vorhergehenden Ansprüche 1 bis 5, **dadurch gekennzeichnet, dass** die mehrphasige rotierende elektrische Maschine (13) einen Stator umfasst, der wenigstens teilweise von einer Vorrichtung zur Flüssigkeitskühlung umgeben ist.

7. Bordsystem zur Erhöhung der Autonomie (11) eines Elektrofahrzeugs nach einem der vorhergehenden Ansprüche 1 bis 6, **dadurch gekennzeichnet, dass** die mehrphasige rotierende elektrische Maschine (13) von einem Typ mit Permanentmagneten ist.

## Claims

1. On-board system for increasing the range (5, 11) of an electric vehicle of the type comprising a polyphase rotary electric machine (7, 13) mechanically coupled (8) to a combustion engine (6) and electrically connected to an AC-to-DC converter (9, 12) suitable for being connected to a traction battery (2) for supplying at least one electric traction motor (1) with power from an electrical power network (3) of said vehicle, said polyphase rotary electric machine (13) operating only in generator mode, and the on-board system comprising means for measuring a rotational speed (Ωₘ) of said combustion engine (6); means for measuring a voltage (Um) applied to said traction battery (2) by said AC-to-DC converter (12) and **characterized by** means (16) for disconnecting said traction battery (2) from said AC-to-DC converter (12) when said rotational speed (Ωₘ) is lower than a predetermined nominal speed or said voltage (Um) is higher than a predetermined nominal voltage so that the machine (13) supplies the electric traction motor (1) with power directly.

2. On-board system for increasing the range (11) of an electric vehicle according to Claim 1, **characterized in that** it further comprises an electric starter (14) suitable for starting said combustion engine (6) .

3. On-board system for increasing the range (11) of an electric vehicle according to Claim 1 or 2, **characterized in that** said polyphase rotary electric machine (13) is a polyphase alternator and said AC-to-DC converter (12) consists of a diode bridge.

4. On-board system for increasing the range (11) of an electric vehicle according to any one of Claims 1 to 3, **characterized in that** it further comprises:
- means for measuring a charging current (Iₘ) of said traction battery (2);
- an electronic control unit (17) controlling said rotational speed (Ωₘ) according to said charging current (Iₘ) and to a setpoint intensity (I_{c}) .

5. On-board system for increasing the range (11) of an electric vehicle according to Claim 4, **characterized in that** said setpoint intensity (I_{c}) is determined according to said voltage (Um) and to a setpoint voltage (I_{c}) .

6. On-board system for increasing the range (11) of an electric vehicle according to any one of the preceding Claims 1 to 5, **characterized in that** said polyphase rotary electric machine (13) comprises a stator surrounded at least partially by a liquid-cooling device.

7. On-board system for increasing the range (11) of an electric vehicle according to any one of the preceding Claims 1 to 6, **characterized in that** said polyphase rotary electric machine (13) is a permanent-magnet electric machine.
